# EUROPEAN PATENT APPLICATION

(11) **EP 2 779 046 A1**
(43) Date of publication of application: **17.09.2014**
(21) Application number: 14158747.7
(22) Date of filing: 11.03.2014
(51) Int. Cl.: G06Q 10/06

(54) **Visualization of information regarding anomalous user behaviors in a corporate computer environment**

(30) Priority: 12.03.2013 US 201313797663
(71) Applicant: Palo Alto Research Center Incorporated, Palo Alto, California 94304 (US)
(72) Inventor: Liu, Juan, Cupertino, CA 95014 (US); Brdiczka, Oliver, Mountain View, CA 94304 (US)
(74) Representative: Lord, Michael

(57) **Abstract**

One embodiment of the present invention provides a user interface for presenting anomaly-detection outcomes associated with an organization to a user. The user interface includes a receiving mechanism configured to receive the anomaly-detection outcomes, a display that displays the anomaly-detection outcomes at a first resolution, and a command-receiving mechanism configured to receive commands from the user. In response to receiving a respective user command, the display is configured to display the anomaly-detection outcomes at a second resolution.

## Description

### BACKGROUND

### Field

This disclosure is generally related to a user interface. More specifically, this disclosure is related to a user interface that enables multiple levels of visualization of anomalies in a large corporation.

### Related Art

Anomaly detection plays a very important role in preventing disastrous incidents caused by insiders in a large organization, such as a corporation or a government agency. By detecting anomalous behaviors of an individual, the organization may intervene or prevent the individual from committing a crime that may harm the organization or society at large. For example, a military base may monitor behaviors of soldiers and notice that a particular solider may exhibit signs of mental instability. Early intervention, such as consulting with a psychiatrist, may prevent that individual solider from becoming homicidal or suicidal. The detected anomalies are often presented to an analyst, who will conduct further investigations.

### SUMMARY

One embodiment of the present invention provides a user interface for presenting anomaly-detection outcomes associated with an organization to a user. The user interface includes a receiving mechanism configured to receive the anomaly-detection outcomes, a display that displays the anomaly-detection outcomes at a first resolution, and a command-receiving mechanism configured to receive commands from the user. In response to receiving a respective user command, the display is configured to display the anomaly-detection outcomes at a second resolution.

In a variation on this embodiment, the display is configured to display an organizational chart for the organization, the organizational chart includes at least one visual representation of a component within the organization, and the visual representation is displayed in a way that is associated with anomaly-detection outcomes specific to the component.

In a further variation, the organizational chart includes a tree diagram representing the hierarchy of the organization, and the visual representation of the component includes a node on the tree diagram.

In a further variation, while displaying the anomaly-detection outcomes at a second resolution, the display is configured to at least one of: expand a node on the tree diagram and collapse a node on the tree diagram.

In a further variation, the visual representation of the component is displayed in a color that is determined by the anomaly-detection outcomes specific to the component.

In a variation on this embodiment, the display is further configured to display an anomaly report specific to a respective individual.

In a further variation, the anomaly report includes at least one of: a time-varying anomaly score, one or more time-varying psychological variables, and one or more groups with which the individual is affiliated.

In a further variation, the anomaly report further includes notes entered by the user.

In a further variation, the anomaly report further includes an event train which displays events and corresponding occurring times of the events.

### BRIEF DESCRIPTION OF THE FIGURES

FIG. 1 presents a diagram illustrating an exemplary computing environment, in accordance with an embodiment of the present invention.
FIG. 2A presents a diagram illustrating an exemplary view of the anomaly-report graphical user interface (GUI), in accordance with an embodiment of the present invention.
FIG. 2B presents a diagram illustrating a sequence of screenshots of the anomaly-report GUI, in accordance with an embodiment of the present invention.
FIG. 3A presents a diagram illustrating an exemplary anomaly report for an individual, in accordance with an embodiment of the present invention.
FIG. 3B presents a diagram illustrating an exemplary anomaly report for an individual, in accordance with an embodiment of the present invention.
FIG. 4 presents a diagram illustrating an exemplary psychological report for an individual, in accordance with an embodiment of the present invention.
FIG. 5 presents a diagram illustrating an exemplary view of the user interface, in accordance with an embodiment of the present invention.
FIG. 6 presents a flowchart illustrating the process for displaying anomaly-detection outcomes at multiple resolutions, in accordance with an embodiment of the present invention.
FIG. 7 illustrates an exemplary computer system for implementing an anomaly-report user interface, in accordance with one embodiment of the present invention.

In the figures, like reference numerals refer to the same figure elements.

### DETAILED DESCRIPTION

The following description is presented to enable any person skilled in the art to make and use the embodiments, and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present invention is not limited to the embodiments shown, but is to be accorded the widest scope consistent with the principles and features disclosed herein.

### Overview

Embodiments of the present invention provide a user interface (UI) that can provide multiple levels of visualization of the anomaly detection for an organization. More specifically, the UI includes a visual representation, such as graphs or charts in gray or color scales, of the anomaly-detection result to a user. A user is capable of zooming in and out of that visual representation to view anomaly-detection outcomes at different levels of the organizational hierarchy.

### Anomaly-Detection System

Anomaly characterization and detection can provide useful and sometimes critical information to an organization, especially for the purpose of intervention and prevention of threats posed by insiders of the organization. In general, an anomaly-detection system is able to analyze massive amounts of data, which may include all sorts of electronically recorded user activities, including but not limited to: emails, text messages, file transfers, and various types of online activities (web pages visited, postings on social network sites, etc.), associated with employees of an organization, and detect abnormal behaviors associated with one or more employees. The anomaly-detection results are then presented to an analyst via an interactive graphical user interface, which allows the analyst to view the results at multiple organizational hierarchy levels. Based on the presented results, the analyst can conduct further analysis and investigation on a particular individual employee.

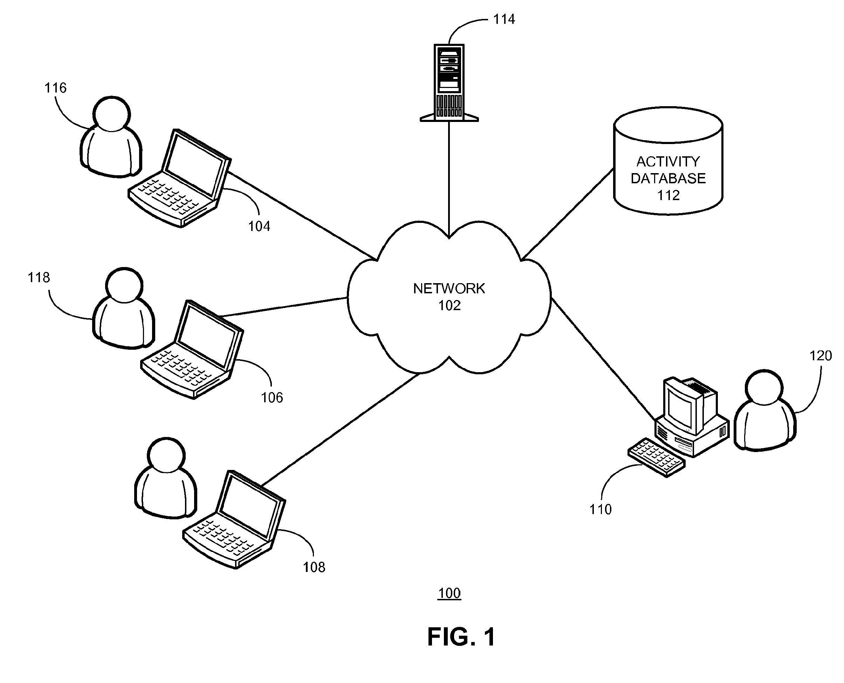

FIG. 1 presents a diagram illustrating an exemplary computing environment, in accordance with an embodiment of the present invention. Computing environment 100 can generally include any type of computer system including, but not limited to, a computer system based on a microprocessor, a mainframe computer, a digital signal processor, a portable computing device, a personal organizer, a device controller, and a computational engine within an appliance. In the example illustrated in FIG. 1, computing environment 100 includes a network 102, a number of client machines 104, 106, 108, and 110, an activity database 112, and an anomaly-detection server 114.

Network 102 can generally include any type of wired or wireless communication channel capable of coupling together computing nodes. This includes, but is not limited to, a local area network (LAN), a wide area network (WAN), an enterprise's intranet, a virtual private network (VPN), and/or a combination of networks. In one embodiment of the present invention, network 102 includes the Internet. Network 102 may also include telephone and cellular networks, such as Global System for Mobile Communications (GSM) networks or Long Term Evolution (LTE) networks

Client machines 104-110 can generally include any nodes on a network with computational capability and a mechanism for communicating across the network. General users, such as users 116 and 118, perform their daily activities on these client machines. The clients can include, but are not limited to: a workstation, a personal computer (PC), a laptop computer, a tablet computer, a smartphone, and/or other electronic computing devices with network connectivity. Furthermore, the client machines may couple to network 102 using wired and/or wireless connections. In one embodiment, each client machine includes a mechanism that is configured to record activities being performed by the general users.

Activity database 112 can generally include any type of system for storing data associated with the electronically recorded activities in non-volatile storage. This includes, but is not limited to, systems based upon magnetic, optical, and magneto-optical storage devices, as well as storage devices based on flash memory and/or battery-backed up memory. In one embodiment, the client machines 104-110 send their recorded user activities to activity database 112 via network 102.

Anomaly-detection server 114 includes any computational node having a mechanism for running anomaly-detection algorithms. In addition, anomaly-detection server 114 is able to provide an anomaly-report user interface, which allows an analyst to view anomaly-detection results. For example, an analyst 120 can access anomaly-detection server 114 using client machine 110 via network 102 and use the anomaly-report user interface to view the anomaly-detection results.

During operation, employees perform their daily activities on the various client machines. These activities may be recorded by the corresponding client machines. In one embodiment, a separate activity-recording server (not shown in FIG. 1) can be used to record user activities. The recorded user activities are sent to and stored in activity database 112. Note that this can comprise a large amount of data because a given organization, such as a government agency or a private corporation, may have hundreds, even thousands of employees, and each individual employee may perform a large number of activities every day, such as receiving or sending hundreds of emails, viewing hundreds of web pages, or performing hundreds of acts of file access or transfer.

Anomaly-detection server 114 is responsible for detecting anomalous behaviors. In one embodiment, anomaly-detection server 114 accesses activity database 112 to obtain activity records associated with the employees of an organization. Various types of algorithms can be used to analyze the massive amount of data and perform the anomaly detection. For example, graph analysis and machine learning technologies can be used to detect data anomalies. In addition, the system can also use psychological modeling to detect psychological anomalies among the monitored employees.

The anomaly-detection results are presented to an analyst via a graphical user interface (GUI). The analyst can directly access anomaly-detection server 114 to use the anomaly-report GUI, or the analyst can use a client machine that is coupled to anomaly-detection server 114 to use the anomaly-report GUI. For example, an analyst 120 can use client machine 110 to access the GUI provided by anomaly-detection server 114 to view the anomaly-detections results.

### Multi-level Anomaly-Report User Interface

In order to better assist the analyst in viewing the anomaly-detection results, the system presents visual representations (in the form of charts or graphs in gray or color scales) of the results in multiple resolutions. In addition to a visualization of the general sentiment or anomalous activities associated with the entire organization, the system also allows the analyst to view the anomaly-detection results associated with a sub-division of the system, as well as the anomaly-detection results associated with each individual employee. In one embodiment, the anomaly-detection results include anomaly scores and psychological variables associated with individual employees. An anomaly score associated with an individual indicates the possibility that this individual is anomalous. Examples of psychological variables include a measure of disgruntlement.

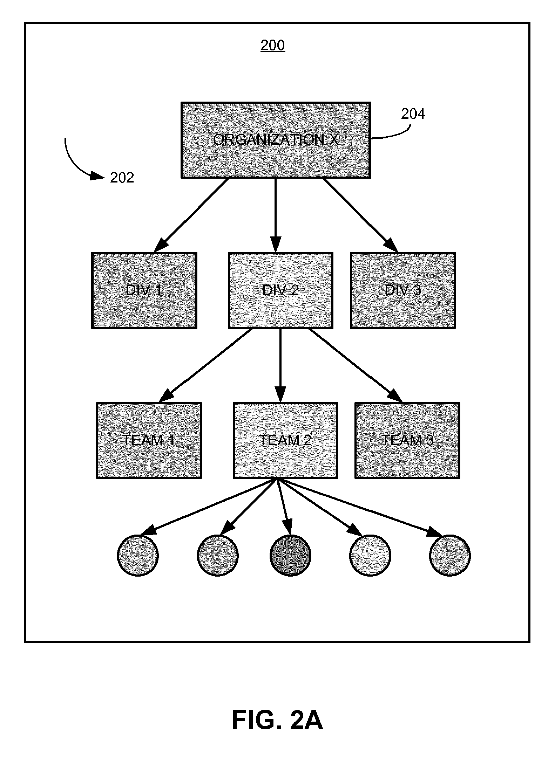

FIG. 2A presents a diagram illustrating an exemplary view of the anomaly-report graphical user interface (GUI), in accordance with an embodiment of the present invention. In FIG. 2A, an anomaly-report GUI 200 includes a tree structure 202 representing the organizational hierarchy of an organization X, each node in tree structure 202 representing a unit, which can be a sub-division or an individual employee, within the organization. Each node can be shown as a color-coded or grayscale patch. The color or the scale of gray for a node indicates a level of disgruntlement associated with that node. Note that, other than known organizational hierarchy, as shown in FIG. 2A, the association of individuals to certain groups may be automatically discovered via certain group discovery methods, such as graph partitioning or node clustering. Once a group is identified, the general health of the group can be visualized as well. To do so, one needs to know the group memberships, as well as an aggregation function for summarizing individual anomalous levels into a group anomalous level.

In the example shown in FIG. 2A, the entire organization (organization X) is visualized in the GUI as a single rectangular patch 204. The overall state of the organization, such as whether the organization is happy, productive, or normal, is indicated by the color or grayscale used for filling single rectangular patch 204. In the example shown in FIG. 2A, a light gray is used to fill single rectangular patch 204, which indicates that the organization is in a healthy or normal state. Other neutral colors, such as green, can also be used to indicate a healthy state. Note that an organization being in a normal or healthy state means that few (less than a threshold) individuals with anomalous behaviors are being detected within that organization.

From the organizational hierarchy shown in FIG. 2A, one can see that organization X includes three divisions, divisions 1 to 3. Each division is also visualized as a rectangular grayscale or color-filled patch. Similarly, the grayscale or the color of a patch indicates the overall state of the corresponding division. In the example shown in FIG. 2A, patches for divisions 1 and 3 are filled with a light gray color, meaning these divisions are healthy, with few anomalous individuals. In contrast, the patch corresponding to Division 2 is filled with pink, meaning that this particular division is slightly unhealthy, with more anomalous individuals than divisions 1 and 3.

Similarly, FIG. 2A also shows that Division 2 includes three teams, teams 1 to 3, with each team visualized as a rectangular patch. The overall health of each team is indicated by the grayscale or color filling the patch. In the example shown in FIG. 2A, patches for teams 1 and 3 appear in light gray, indicating that these teams are in a healthy state; the patch for Team 2 appears in pink, indicating that this particular team is slightly unhealthy.

Each team includes a number of individuals, visualized in FIG. 2A as grayscale or color-flled circles. In the example shown in FIG. 2A, team 2 include five individuals, visualized as five color-filled circles. Some of the circles appear in light gray, indicating that the corresponding individuals do not appear to be anomalous; one circle appears in pink, indicating that the individual may demonstrate certain anomalous, though not yet alarming behaviors; and one circle appears in red, indicating that the corresponding individual is alarmingly anomalous.

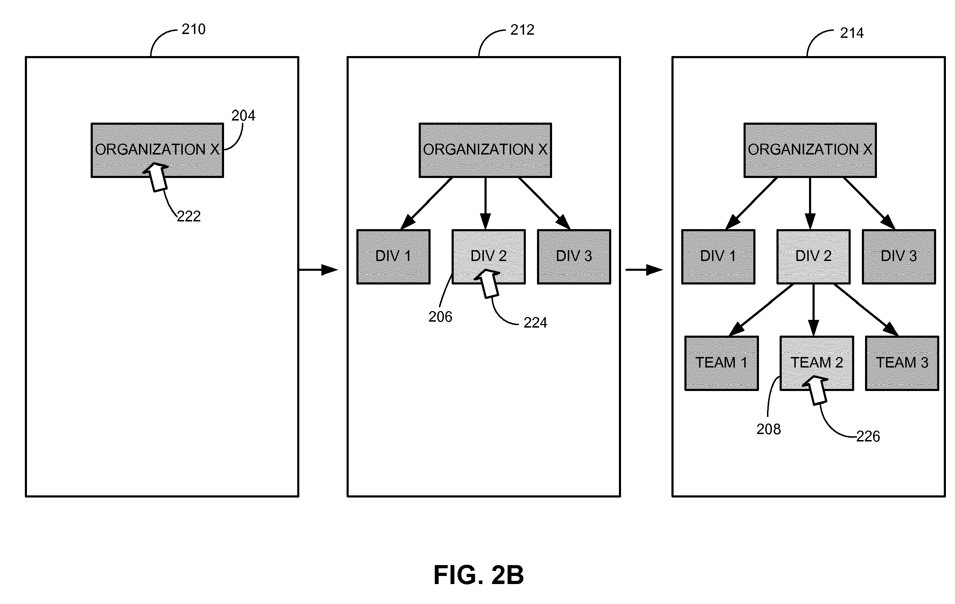

FIG. 2B presents a diagram illustrating a sequence of screenshots of the anomaly-report GUI, in accordance with an embodiment of the present invention. These screenshots show the expansion of the tree structure when one navigates from a top-level organizational view to a more detailed view of sub-divisions. In FIG. 2B, screenshot 210 shows that the anomaly-report GUI presents the user with an initial organization-level view. More specifically, screenshot 210 includes only a single patch 204 that visualizes the organization as a whole, which is the root node of the organization tree. For someone who is just interested in monitoring the general state of the organization, this visualization is sufficient because the grayscale or the color used for single patch 204 indicates the general state (such as the general sentiment, the total count of anomalous behaviors/individuals, health of the business, and productivity) of the organization. If he wants to know more detailed information about the organization, he can click on patch 204, as shown by a hollow arrow 222. Clicking on patch 204 results in the GUI presenting a next screenshot 212.

In screenshot 212, root node 204 is expanded to three branches, each leading to a node representing a division within the organization. The visualization of the individual divisions is similar to the visualization of the entire organization. The grayscale or color used for each division node indicates the aggregated anomalous value for members within the division. Division node 206 is light pink, indicating that the corresponding division has an elevated anomalous level. If a user wishes to know more detailed information about this particular division, he can click on node 206, as shown by a hollow arrow 224. Clicking on division node 206 results in division node 206 expanding to three branches, each leading to a node representing a team within the division, as shown by screenshot 214. Like the division nodes, the grayscale or color used for a team node visualizes the generalized anomalous level associated with that team. In screenshot 214, team node 208 is light pink, indicating that the corresponding team has a slightly elevated anomalous level. If a user wishes to know more detailed information about this particular team, he can click on team node 208, as shown by a hollow arrow 226. Clicking on team node 208 will result in team node 208 expanding to multiple branches, each leading to a node representing an individual within the team, as shown in FIG. 2A.

FIG. 2B demonstrates how one can zoom from a visual representation of an entire corporation into a visual representation of its subdivisions, and then into a visual representation of individual employees. If a user, such as an analyst, wishes to see a detailed anomaly report associated with an individual, he can click on an individual node. In FIG. 2A, individual nodes are visualized as color-filled circles.

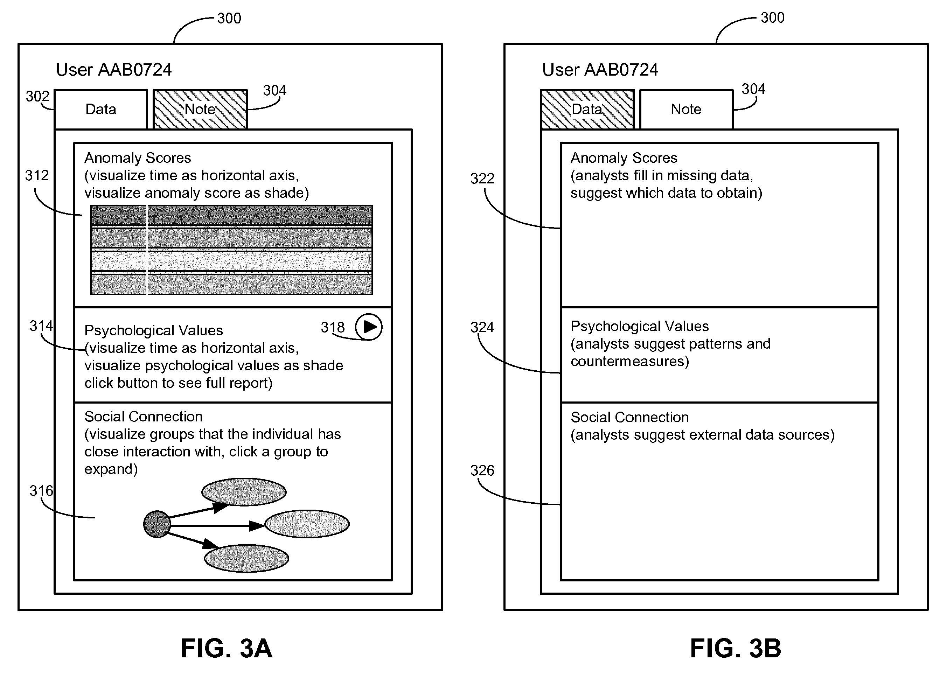

FIG. 3A presents a diagram illustrating an exemplary anomaly report for an individual, in accordance with an embodiment of the present invention. User interface 300 includes two selectable tabs, a data tab 302 and a note tab 304. In FIG. 3A, data tab 302 is selected, which results in three panels being displayed, including a anomaly-scores display panel 312, a psychological-values display panel 314, and a social-connection display panel 316.

Anomaly-scores display panel 312 displays anomaly scores of the selected individual, which is a user AAB0724 in the example shown in FIG. 3A. The anomaly score, which can be a time-varying variable, can be displayed in various forms. In one embodiment, anomaly-scores display panel 312 displays a visual representation of the anomaly score of the selected individual. In a further embodiment, the visual representation of the anomaly score is a horizontally expanded shaded area with the time visualized as the horizontal axis and the anomaly scores visualized as the shade of the area. For example, a darker shade indicates a higher anomaly score.

Psychological-values display panel 314 includes a button 318, the clicking of which can result in the display of a psychological report on the selected individual. Like the anomaly scores, psychological values are also time-varying. In one embodiment, the time is visualized as a horizontal axis, and the psychological values are visualized as the shade of a horizontally expanding area.

Social-connection display panel 316 displays the social connection of the selected individual. For example, the selected individual may be associated with multiple groups, such as an employment-related group or a social group. Each of the groups can also be visualized as a color or grayscale patch, with the color or grayscale indicating its general health. An analyst can navigate from the anomaly report for an individual to an overview of an associated group by clicking on a patch representing the group. In addition to associated groups, one individual may have a close association to other individuals, such as a close friend. Such an association may also be displayed in social-connection display area 316. An analyst can navigate from the anomaly report for an individual to the anomaly report for a different, associated individual by clicking on the visual representation (such as a color-filled circle) for that different individual. Note that these two individuals may or may not belong to the same subdivision of the organization.

FIG. 3B presents a diagram illustrating an exemplary anomaly report for an individual, in accordance with an embodiment of the present invention. In FIG. 3B, note tab 304 is selected, which results in three panels being displayed, including a anomaly-scores note panel 322, a psychological-values note panel 324, and a social-connection note panel 326.

Anomaly-scores note panel 322 allows an analyst to input data associated with the anomaly scores relevant to the selected individual. For example, the analyst may fill in data that are missing from the automatic anomaly detection, such as data obtained from further investigation. Or the analyst may write a note suggesting what kind of data should be obtained during further investigation.

Psychological-values note panel 324 allows an analyst to write a note suggesting what patterns to watch for and countermeasures associated with the selected individual's psychological variables.

Social-connection note panel 326 allows an analyst to write a note to suggest any external data sources that may be useful in determining the individual's anomaly status. For example, it may be useful to obtain information for an outside individual that has a close relationship, such as a family member, with the selected individual.

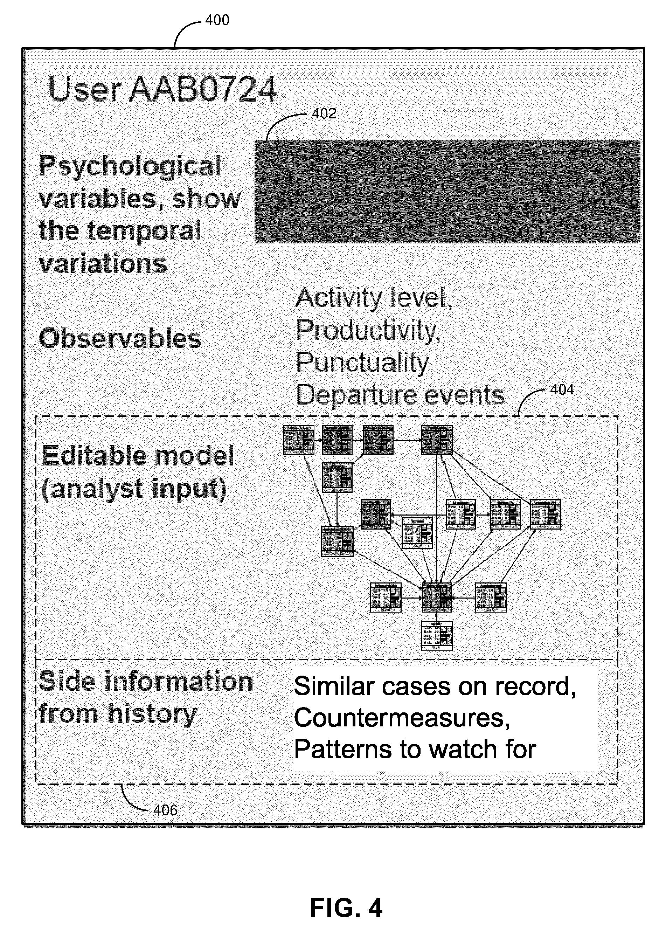

FIG. 4 presents a diagram illustrating an exemplary psychological report for an individual, in accordance with an embodiment of the present invention. Note that the psychological report is displayed in response to an analyst clicking button 318. In the example shown in FIG. 4, psychological report 400 includes various information related to an individual's psychological status, such as one or more psychological variables as a function of time, one or more observables, models used for determining the psychological status, other useful historical information, etc.

A psychological-variables display 402 provides a visual representation of one or more psychological variables, such as a disgruntlement measure. In one embodiment, a psychological variable is plotted in a chart as a function of time. In the example shown in FIG. 4, display 402 displays a chart, with the x-axis representing time and the y-axis representing the disgruntlement measure. In a further embodiment, the background color of display 402 indicates the overall (which can be averaged over time) disgruntlement measure of the selected individual. In the example shown in FIG. 4, display 402 has a red background, indicating that the individual has an alarmingly high disgruntlement measure.

The observables displayed in psychological report 400 indicate what types of event have been monitored by the system when determining the psychological variables. The observables may include, but are not limited to: activity level, productivity, punctuality, departure events, etc. For example, a sudden change in the productivity or punctuality of an individual employee may indicate psychological instability, or the departure of a key team member may impact the psychological status of the remaining team members.

Psychological report 400 also includes a model display area 404 that displays the psychological models used for determining the psychological variables. For example, a personality-prediction model can be used to determine an individual's personality based on his monitored behavior and interactions with others within his social network. These models can be system defaults or inputted by an analyst. Moreover, the analyst can edit these models via the user interface.

Psychological report 400 also includes an additional information display area 406, which displays additional information that can be useful in determining the selected individual's psychological status. The additional information includes, but is not limited to: similar cases on record, countermeasures that have been implemented, behavior patterns that should be watched for, etc.

To give an analyst a clear view of how an individual's psychological state impacts the overall state of his subdivision, or even the entire organization, it may be helpful to plot the individual's psychological state (such as his disgruntlement measure) against that of the subdivision or the organization.

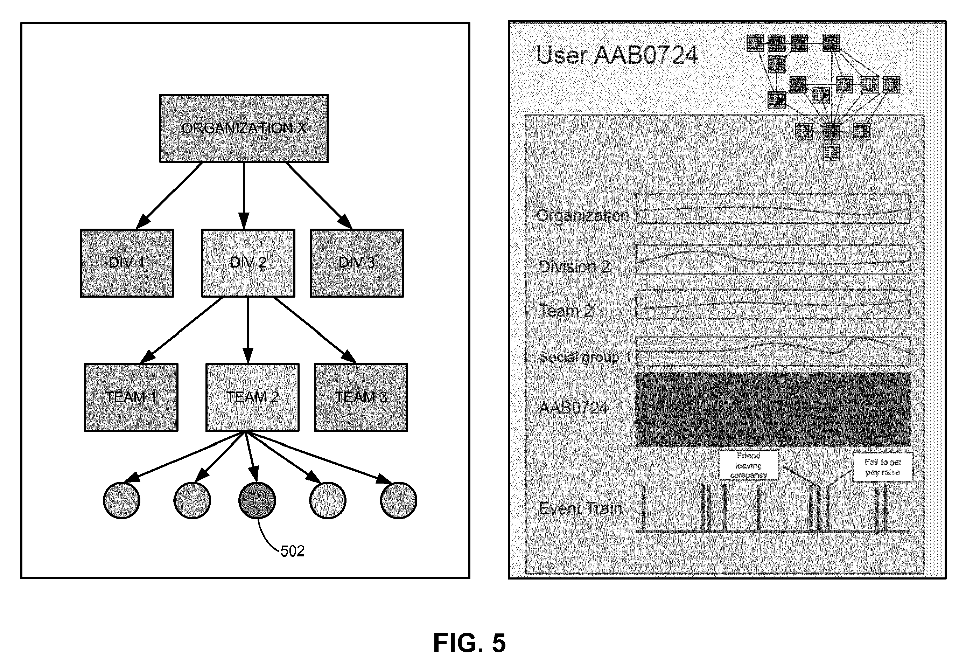

FIG. 5 presents a diagram illustrating an exemplary view of the user interface, in accordance with an embodiment of the present invention. In FIG. 5, the left drawing is similar to that displayed in FIG. 2A, which visualizes anomalies within an organization and its subdivisions using the organizational hierarchy tree. The organization hierarchy is displayed here for comparison purposes. The right drawing is specific to a selected individual, such as a user AAB0724. More specifically, the right drawing in FIG. 5 displays a number of visual representations of a determined psychological variable, such as a disgruntlement measure, for the selected individual and his affiliated groups.

Based on the organization hierarchy, user 502 (corresponding to user AAB0724) belongs to Team 2, which in turn belongs to Division 2 of the organization. Consequently, in addition to displaying the disgruntlement measure of the user AAB0724, FIG. 5 also displays the disgruntlement measure for Team 2, Division 2, and the entire organization. The disgruntlement measure for a number of social groups, such as social group 1 as shown in FIG. 5, can also be displayed alongside. Note that the social group is not shown in the organizational hierarchy because it may include people across multiple hierarchical levels.

Like FIG. 4, various forms of visual representation of the psychological variable can be used. In the example shown in FIG. 5, the psychological variable is displayed as a chart, with the x-axis representing time and the y-axis representing the value of the psychological variable. In addition, the background color of each chart indicates the overall (which can be averaged over time) value of the psychological variable for the corresponding individual or group. Note that in FIG. 5, the background for a particular chart matches the color used in the anomaly visualization based on the organizational hierarchy tree. For example, in the left drawing, node 502 (corresponding to user AAB0724) is filled with red, indicating his anomaly status to be alarmingly high. Correspondingly, in the right drawing of FIG. 5, the psychological variable chart for user AAB0724 has a red background, indicating that the displayed psychological value is alarmingly high. Similarly, in the left drawing, the node for Team 2 is filled with a light pink, indicating a lightly elevated anomaly status; the psychological variable chart for Team 2 also has a light pink background, as shown in the right drawing of FIG. 5.

In addition to comparing an individual's psychological status with his affiliated groups, in some embodiments, the user interface also displays various characteristics of the individual, such as his anomaly scores or disgruntlement measure, alongside similar characteristics of his history or other individuals.

An individual's life events often impact his psychological status. To better understand how certain events can lead to anomalous behavior, it may be helpful to plot events against time and compare the results with the determined psychological status. In the example shown in FIG. 5, an event train showing when various significant events occurred to the individual is plotted. By comparing the chart for user AAB0724's disgruntlement measure with the event train, one can see that a peak in the disgruntlement measure correlates in time with a number of events, such as the departure of his friend and his failure to get a pay raise.

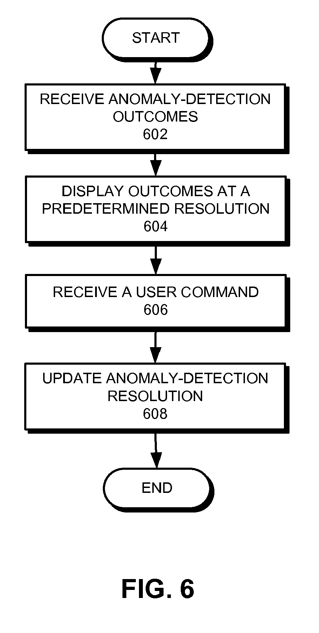

FIG. 6 presents a flowchart illustrating the process for displaying anomaly-detection outcomes at multiple resolutions, in accordance with an embodiment of the present invention. During operation, the system receives anomaly-detection outcomes for an organization (operation 602), and displays the outcomes at a predetermined resolution (operation 604). Note that the predetermined resolution can be a system default or set beforehand by a user. For example, a default display resolution may be the organization level, where the system only displays anomaly-detection results for the entire organization. Or a user may set the display resolution to a certain hierarchy level, and anomaly-detection results for sub-divisions above that hierarchy level are displayed.

Subsequently, the system receives a user command (operation 606). The user command may be a click on a visual representation of the organization or a sub-division, or a selection made to a specific side panel. In response, the system updates the display resolution (operation 608). For example, if the user clicks on the visual representation of a sub-division, the system expands the sub-division to sub-divisions at a lower hierarchy and displays anomaly-detection results for those lower hierarchy sub-divisions. If the user clicks on a visual representation of an individual, the system presents a detailed anomaly report and/or psychological report for that individual. In addition, the user may choose to return to a higher hierarchy level resolution by collapsing a sub-division node, and all child nodes for the sub-division node are then hidden.

### Computer System

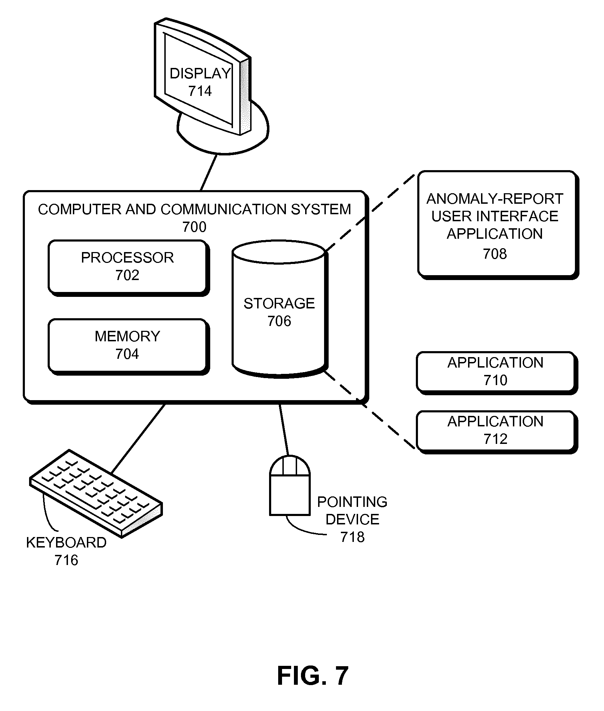

FIG. 7 illustrates an exemplary computer system for implementing an anomaly-report user interface, in accordance with one embodiment of the present invention. In one embodiment, a computer and communication system 700 includes a processor 702, a memory 704, and a storage device 706. Storage device 706 stores an anomaly-report user interface application 708, as well as other applications, such as applications 710 and 712. During operation, anomaly-report user interface application 708 is loaded from storage device 706 into memory 704 and then executed by processor 702. While executing the program, processor 702 performs the aforementioned functions. Computer and communication system 700 is coupled to an optional display 714, keyboard 716, and pointing device 718.

In general, the anomaly-report user interface provided by embodiments of the present invention allows an analyst to visualize anomalies (such as anomalous behaviors or disgruntled sentiments) within an organization at multiple resolutions, such as at the organizational level, at various sub-divisional levels, or at the individual level. Moreover, the user interface makes it possible for the analyst to navigate freely among the different resolutions. For example, the analyst can click on a node in a tree diagram representing the organization's hierarchy to expand the node to branches that represent groups or individuals at lower hierarchy levels, and specific panels on the side of the user interface may allow the analyst to navigate up to a higher hierarchy level. Detailed anomaly or psychological reports of an individual can also be presented when the analyst click on a visual representation of a particular individual. Various visual-assistance techniques, such as color schemes, can be used to display the anomalies or psychological variables.

Note that the various views of the user interface displayed in the figures (such as FIGS. 2A, 2B, 3A, 3B, 4, and 5) are merely exemplary. Other variations are also possible. For example, other than a tree diagram, the visualization of an organization may be represented using other forms, such as a matrix chart or an organigraph. Moreover, in additional to using color or grayscale to map anomalies, it is also possible to use the shape or size of a node to indicate anomaly levels.

The data structures and code described in this detailed description are typically stored on a computer-readable storage medium, which may be any device or medium that can store code and/or data for use by a computer system. The computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, methods and processes described herein can be included in hardware modules or apparatus. These modules or apparatus may include, but are not limited to, an application-specific integrated circuit (ASIC) chip, a field-programmable gate array (FPGA), a dedicated or shared processor that executes a particular software module or a piece of code at a particular time, and/or other programmable-logic devices now known or later developed. When the hardware modules or apparatus are activated, they perform the methods and processes included within them.

## Claims

1. A user interface for presenting anomaly-detection outcomes associated with an organization to a user, the user interface comprising:
a receiving mechanism configured to receive the anomaly-detection outcomes;
a display that displays the anomaly-detection outcomes at a first resolution; and
a command-receiving mechanism configured to receive commands from the user;
wherein in response to receiving a respective user command, the display is configured to display the anomaly-detection outcomes at a second resolution.

2. The user interface of claim 1, wherein the display is configured to display an organizational chart for the organization, wherein the organizational chart includes at least one visual representation of a component within the organization, and wherein the visual representation is displayed in a way that is associated with anomaly-detection outcomes specific to the component.

3. The user interface of claim 2, wherein the organizational chart includes a tree diagram representing the hierarchy of the organization, and wherein the visual representation of the component includes a node on the tree diagram.

4. The user interface of claim 3, wherein while displaying the anomaly-detection outcomes at a second resolution, the display is configured to at least one of:
expand a node on the tree diagram; and
collapse a node on the tree diagram.

5. The user interface of claim 2, wherein the visual representation of the component is displayed in a color that is determined by the anomaly-detection outcomes specific to the component.

6. The user interface of any of the preceding claims, wherein the display is further configured to display an anomaly report specific to a respective individual.

7. The user interface of claim 6, wherein the anomaly report includes at least one of:
a time-varying anomaly score;
one or more time-varying psychological variables; and
one or more groups with which the individual is affiliated.

8. The user interface of claim 6, wherein the anomaly report further includes notes entered by the user.

9. The user interface of claim 6, wherein the anomaly report further includes an event train which displays events and corresponding occurring times of the events.

10. A non-transitory computer-readable storage medium storing instructions that when executed by a computer cause the computer to present a user interface for presenting anomaly-detection outcomes associated with an organization to a user, in accordance with any of the preceding claims.

11. A method for presenting anomaly-detection outcomes associated with an organization to a user, the method comprising:
receiving the anomaly-detection outcomes;
displaying the anomaly-detection outcomes at a first resolution; and
receiving commands from the user, wherein a respective user command results in the anomaly-detection outcomes being displayed at a second resolution.

12. The method of claim 11, wherein displaying the anomaly-detection outcomes involves displaying an organizational chart for the organization, wherein the organizational chart includes at least one visual representation of a component within the organization, and wherein the visual representation is displayed in a way that is associated with anomaly-detection outcomes specific to the component.
